# EUROPEAN PATENT APPLICATION

(11) **EP 1 754 998 A1**
(43) Date of publication of application: **21.02.2007**
(21) Application number: 05743176.9
(22) Date of filing: 20.05.2005
(51) Int. Cl.: G03B 21/62, G03B 21/00, G03B 21/14, G03B 21/28

(54) **BATHROOM PROJECTOR SYSTEM AND PROJECTOR**

(30) Priority: 21.05.2004 JP 2004178968
(71) Applicant: FIGLA CO., LTD., Tokyo 105-0014 (JP)
(72) Inventor: DAMMURA, Yoshikazu, Figla Co., Ltd., Minato-ku, Tokyo 105-0014 (JP); OGOSHI, Manabu, Figla Co., Ltd., Minato-ku, Tokyo 105-0014 (JP); HONDA, Yasutoshi, Figla Co., Ltd., Minato-ku, Tokyo 105-0014 (JP); WADA, Akitsugu, Figla Co., Ltd., Minato-ku, Tokyo 105-0014 (JP)
(74) Representative: Vleck, Jan Montagu
(86) International application number: PCT/JP2005/009706
(87) International publication number: WO 2005/114320

(57) **Abstract**

The present invention relates to a projector system capable of projecting a video image, a computer image, or the like with magnification so that the image can be comfortably viewed even in a humid environment such as in a bathroom or sauna room, and of listening to music. The projector system includes: a bathroom in which, on at least one side thereof, a glass functioning as a projection surface is disposed; a dressing room adjacent to the bathroom; and a projector device which is installed in a position opposite to the glass, for projecting a video image, in which: the glass is formed of a laminated glass composed of at least two glass plates; at least one glass plate of the laminate glass is a heat generating glass plate having a transparent conductive film; and the two glass plates constituting the laminated glass are provided with a translucent milk white intermediate film interposed therebetween, thereby making it possible to project a clear video image by preventing dew formation and clouding even in a highly humid environment such in as a bathroom.

## Description

### Technical Field

The present invention relates to a projector system capable of projecting a video image, a computer image, or the like with magnification so that the image can be comfortably viewed even in a humid environment such as in a bathroom or sauna room, and of listening to music.

### Background Art

Recent changes in lifestyle involve an increase in demand for enjoying movies, videos, and the like (hereinafter, referred to as "video image") while taking a bath. There have been proposed techniques such as a technique of fitting a television receiver into a side wall of a bathroom, and a technique in which, when a large screen is desired, a screen and a projector device are prepared first, and then, the screen is hung on or fitted into the side wall thereof to project an image by the projector device provided to an opposing side wall thereof.

However, humidity in the bathroom and a dressing room is extremely high due to water vapor in a bath tub, so a reflecting mirror in the bathroom as well as a looking glass in the dressing room are clouded in many cases. Therefore, in the above-described cases where the television receiver is fitted into the side wall of the bathroom and where the screen is hung on or fitted into the side wall of the bathroom, there arises a problem in that the image becomes unclear.

Further, for the projector device, there has been generally used a structure in which a projection means for projecting and guiding an original image from a projector with magnification, and a plurality of reflecting mirrors are provided with a cabinet, and a guided image light flux is finally projected on the screen.

However, the projector device as described above involves a premise that projection is performed with an optical axis perpendicular to the screen. Therefore, when the optical axis perpendicular to the screen cannot be maintained, there arises a problem in that a trapezoidal distortion or the like causes an image distortion, so installation conditions of the reflecting mirrors have large restrictions. Thus, an area devoted for an optical system such as a projector lens becomes larger, so a dimension increases in a depth direction of the projector device with respect to the screen, thereby making it impossible to realize a thin projector device.

In view of the above-mentioned circumstance, the present invention provides a projector system suitable for use in a humid environment such as in a bathroom, and also provides a projector device according to the projector system.

### Disclosure of the Invention

A bathroom projector system according to the present invention includes: a bathroom in which, on at least one side thereof, a glass functioning as a projection surface is disposed; a dressing room adjacent to the bathroom; and a projector device which is installed in a position opposite to the glass, for projecting a video image, and is characterized in that: the glass is formed of a laminated glass composed of at least two glass plates; at least one glass plate of the laminate glass is a heat generating glass plate having a transparent conductive film; and the two glass plates constituting the laminated glass are provided with a translucent milk white intermediate film interposed therebetween.

With the above-mentioned construction, the heat generating glass plate having the transparent conductive film is used as one glass plate of the glass plates constituting the laminated glass, thereby making it possible to realize projection of a clear video image by preventing dew formation and clouding.

A bathroom projector system according to the present invention includes: a bathroom in which, on at least one side thereof, a glass functioning as a projection surface is disposed; a dressing room adjacent to the bathroom; and a projector which is installed in a position opposite to the glass, for projecting a video image, and is characterized in that: the glass is formed of a laminated glass composed of at least two glass plates; at least one glass plate of the laminate glass is a heat generating glass plate having a transparent conductive film; and the two glass plates constituting the laminated glass are provided with an intermediate film interposed therebetween, only a portion of the intermediate film on which the video image from the projector is projected being milk white and a portion thereof on which the video image from the projector is not projected being transparent.

With the above-mentioned construction, for the glass, there is used the intermediate film in which the only the portion on which the video image from the projector is projected is translucent milk white and the portion of the intermediate film on which the video image from the projector is not projected is transparent. Therefore, the glass can be used as a screen. A portion other than the projection surface portion is transparent, thereby making it possible to reduce a feeling of pressure in the bathroom.

In the heat generating glass plate, an entire surface of the glass plate is not necessarily a heat generating surface, but preferably, is made to be the heat generating surface, thereby making it possible to prevent adversely affecting the projection due to running of water droplets after dew formation on an upper surface of the glass.

Further, there arises a problem in that an interior illumination in the bathroom and unnecessary light reflected by a reflector such as the looking glass arranged in the dressing room are reflected in the glass, thereby making the video image unclear. However, the problem can be solved by applying an anti-reflection etching to each of the projection surface and an image viewing surface of the glass.

The projector may be arranged in the bathroom, but is preferably arranged in the dressing room and the glass is arranged on a side surface separating the bathroom and the dressing room, thereby making it possible to use the glass as a screen, and a projector and a screen are not required to be separately arranged in the bathroom, so it is possible to use the bathroom roomily. Further, a projector with a water proof function is not required and a normal projector may be used.

The above-mentioned projector may be unitized as a projector device.

The projector is structured to include the cabinet, a projector stored in the cabinet, for projecting an original image with magnification, and an optical system for guiding an image light flux which is projected with magnification by the projector to the projection surface of the laminate glass, the optical system including at least one mirror surface, thereby making it possible to effectively utilize a narrow dressing room without using a short focus lens.

The projector device according to the present invention including, in the cabinet, the projector for projecting the original image with magnification and the optical system for guiding the image light flux projected by the projector toward a predetermined portion of the cabinet, is characterized in that a translucent movable member is provided to a portion through which projection is performed from the cabinet to an outside.

In the projector device according to the present invention including, in the cabinet, the projector for projecting the original image with magnification and the optical system for guiding the image light flux projected by the projector toward a predetermined portion of the cabinet, a light-blocking movable member may be provided to the portion through which the projection is performed from the cabinet to the outside.

The translucent movable member is formed, for example, of glass which allows the image light flux projected by the projector to directly pass therethrough. The light-blocking movable member has a structure in that a reflecting mirror surface is formed on at least one surface thereof and functions as a part of the optical system through a positional shift of the movable member.

Further, in the above-mentioned construction, a rotary member is formed on the side surface or a top surface of the cabinet and movable means is provided on a bottom portion of the cabinet.

Further, the present invention is characterized in that the cabinet is provided with ventilation means and a humidity sensor in consideration of use in the bathroom.

Further, in a case where the projector is arranged in the dressing room and the light flux from the projector is directly projected on the projection surface, a distance from the projector to the projection surface is short, so it is effective to use a short focus lens as a lens of the projector. However, in general, the short focus lens is expensive, so it is not economically beneficial. The economic problem can be solved by a structure which is realized at lower costs by arranging the looking glass in the dressing room and realizing such a structure that the looking glass reflects the light flux from the projector and the light flux reflected on the looking glass is projected on the projection surface of the laminated glass.

Note that the heat generating glass plate having the transparent conductive film is attached to the looking glass, thereby making it possible to prevent dew formation and clouding even in the highly humid dressing room and to use the looking glass as a reflecting mirror.

Further, with regard to sound production means such as a speaker, an exciter is installed on a side of the laminated glass forming the projection surface, thereby causing sound to be outputted from a plate material itself. Therefore, a direction of the image and a direction of a position where the sound is generated are the same, so it is possible to provide an effect of enhancing realistic sensation and spatial sensation of an audience. Further, the speaker is of a flat type, so there is such a functional advantage that a directivity of the sound is so low that the sound can be caught from every direction, thus, a difference in sound volume according to distance from a sound source is reduced.

### Brief Description of the Drawings

Fig. 1 is a plan view showing an outline of a bathroom projector system according to Embodiment 1 of the present invention.
Fig. 2 is a side view showing the outline of the bathroom projector system according to Embodiment 1 of the present invention.
Figs. 3 are views showing a laminated glass used in the present invention, in which a part (a) is a side sectional view and a part (b) is a plan view.
Fig. 4 is a plan view showing an outline of a bathroom projector system according to Embodiment 2 of the present invention.
Fig. 5 is a side view showing the outline of the bathroom projector system according to Embodiment 2 of the present invention.
Fig. 6 is a top view showing a projector device according to Embodiment 3 of the present invention.
Fig. 7 is a side view showing the projector device according to Embodiment 3 of the present invention.
Fig. 8 is a front view showing the projector device according to Embodiment 3 of the present invention.
Fig. 9 is a top view showing a projector device according to Embodiment 4 of the present invention.
Fig. 10 is a side view of the projector device according to Embodiment 4 of the present invention.
Fig. 11 is a front view of the projector device according to Embodiment 4 of the present invention.

### Best Modes for carrying out the Invention

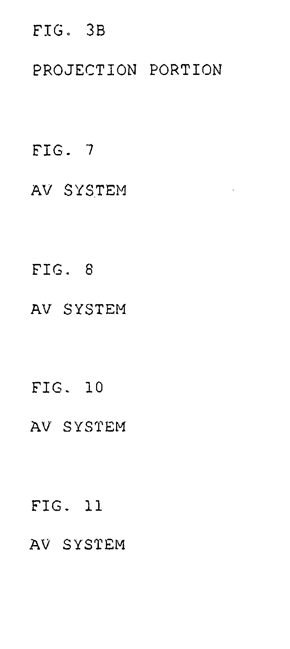

Fig. 1 is a plan view showing an outline of a bathroom projector system according to Embodiment 1 of the present invention. Fig. 2 is a side view showing the outline of the bathroom projector system according to Embodiment 1 of the present invention. Fig. 3 shows a structure of a laminated glass for use in the bathroom projector system according to Embodiment 1 of the present invention. In this embodiment, reference numeral 1 denotes a laminated glass, 2 denotes a bathroom, 3 denotes a dressing room, 40 denotes a projector device formed only of a projector which is not unitized. Reference numeral 11 denotes a glass plate having a projection surface of the laminated glass 1, 12 denotes an intermediate film arranged between the laminated glass 1, 13 denotes a glass plate having an image viewing surface of the laminated glass 1, 14 denotes a transparent conductive film attached to the glass plate 13 having the image viewing surface, 15 denotes a sash for fixing the laminated glass 1, 16 denotes an electrode for generating heat, and 17 denotes a lead wire connected to a power supply (not shown), for generating heat.

The laminated glass 1 has a structure in which the intermediate film 12 formed to be translucent milk white is sandwiched between the glass plate 11 having the projection surface and the glass plate 13 having the image viewing surface. By forming only a portion of the intermediate film 12, on which an image is projected by the projector device 40, is formed to be milk white, the glass 1 serves as a projection screen. By forming a portion of the intermediate film 12 other than the portion formed to be milk white is formed to be transparent, it is possible to reduce a feeling of pressure provided in the bathroom 1.

The glass plate 13 having the image viewing surface is arranged so as to face the bathroom 2. On a side of the glass plate 13 facing the intermediate film 12, there is arranged the transparent conductive film 14 which is connected to the electrode 16 and the lead wire 17 passing through the sash 15 on an upper portion or a lower portion of the glass plate and connected to the power source (not shown). The conductive film 14 can generate heat by being energized. With this construction, even when an image is viewed while taking bath, dew formation and clouding are not caused on the image viewing surface of the glass plate 13, thereby making it possible to view a clear video image. Further, the transparent conductive film 14 is arranged on an entire surface of the glass plate 13, thereby preventing the dew formation on the upper portion of the glass plate 13, which prevents running of water droplets due to dew formation on the upper portion of the glass plate 13.

Further, the glass plates 11 and 13 are used interior, and with those, there arises a problem in that on the projection surface of the glass plate 11 facing the dressing room 3, re-reflection is caused by a reflector in the dressing room 3 and on the image viewing surface of the glass plate 13 facing the bathroom 2, reflection of an interior illumination of the bathroom 2 is caused, thereby making projection of the clear image difficult. However, in Embodiment 1, an anti-reflection etching 18 is applied to each of the projection surface of the glass plate 11 and the image viewing surface of the glass plate 13, thereby making it possible to prevent re-reflection caused by the reflector in the room and reflection of the interior illumination.

In Embodiment 1, the projector device 40 is arranged in the dressing room 3, so it is possible to use the bathroom roomily. Further, there is no need for a projector with a waterproof function and a normal projector may be used.

Further, in a case where the projector device 40 is arranged in the dressing room 3 as described above and a light flux from the projector device 40 is directly projected on the projection surface of the glass plate 11, a distance from the projector device 40 to the projection surface of the glass plate 11 is short, so a short focus lens which is expensive is required, thereby causing a problem of diseconomy. However, in Embodiment 1 of the present invention, the projector system is structured such that the light flux from the projector device 40 is reflected on a looking glass 32 provided in the dressing room 3 and the light flux reflected on the looking glass 32 is projected on the projection surface of the glass plate 11, thereby making it possible to eliminate the need for the short focus lens and to structure the projection system at low cost.

Note that, usually, on the looking glass 32, there are caused dew formation and clouding according to humidity in the dressing room 32. Therefore it is difficult for the light flux to be reflected clearly. However, in Embodiment 1 of the present invention, a heat generating glass plate having a transparent conductive film is attached to the looking glass 32, thereby making it possible to prevent the dew formation and clouding even in the highly humid dressing room and to use the looking glass 32 as a reflecting mirror for the projector device 40.

Further, with regard to sound production means 5 such as speakers, exciters 51 and 52 are installed on a surface of the glass plate 11 facing the dressing room 3, thereby causing sound to be outputted from a plate material itself on which a video image is projected. Therefore, a direction of the video image and a direction of a position where the sound is generated are the same, so it is possible to provide an effect of enhancing realistic sensation and spatial sensation of an audience. Further, the speaker is of a flat type, so there is such a functional advantage that a directivity of the sound is so low that the sound can be caught from every direction, thus, a difference in sound volume according to distance from a sound source is reduced.

Fig. 4 is a plan view showing an outline of a bathroom projector system according to Embodiment 2 of the present invention. Fig. 5 is a side view showing the outline of the bathroom projector system according to Embodiment 2 of the present invention. In this embodiment, reference numeral 6 denotes a cabinet for accommodating a projector 4. The cabinet 6 is provided with an opening through which an image light flux can pass. The image light flux from the projector 4 is projected on the projection surface of the glass plate 11 via a mirror surface 61 provided in the cabinet 6. In a case where the projector 4 is arranged in the dressing room 3 and the image light flux from the projector 4 is directly projected on the projection surface of the glass plate 11, a distance from the projector 4 to the projection surface of the glass plate 11 is short, so a short focus lens which is expensive is required, thereby causing a problem of diseconomy. However, in Embodiment 2 of the present invention, the mirror surface 61 provided in the cabinet 6 is used, thereby making it possible to effectively utilize the narrow dressing room without using the short focus lens and without limitation on a position of the looking glass.

Fig. 6 is a top view showing a projector device according to Embodiment 3 of the present invention. Fig. 7 is a side view showing the projector device according to Embodiment 3 of the present invention. Fig. 8 is a front view showing the projector device according to Embodiment 3 of the present invention. Reference numeral 40 denotes a projector device, 6 denotes the cabinet, 4 denotes the projector, 31 denotes the mirror surface, 62 denotes a glass door, 7 denotes a caster, 8 denotes a ventilation fan, and 9 denotes a humidity sensor.

In Embodiment 3, in the cabinet 6, the projector 4 for projecting an original image with magnification is installed, and there is provided an optical system for guiding the image light flux projected by the projector 4 toward a predetermined portion of the cabinet 6, specifically, there are provided the mirror surface 61 for causing the reflected light, and on a side surface opposed to the mirror surface 61, a translucent movable member, that is, the glass door 62.

With the above-mentioned construction, it is possible to project a large image plane even in a narrow space. At this time, the projected image light flux causes no trapezoidal distortion.

Further, in the projector device 40 according to Embodiment 3 includes the ventilation fan 8 and the humidity sensor 9. Exhaust heat caused by the projector 4 can be exhausted from a gap in an upper portion of the glass door 62 while taking air in from a gap in a lower end thereof, for example. Accordingly, it is possible to realize the projector device which can surely be used in an environment such as in a living room and even in a highly humid environment such as in a bathroom. In particular, the projector device 40 according to the present invention is useful in the highly humid environment such as in a bathroom. In this case, there arises a problem in that on the projector 4 or the like installed in the cabinet 6 dew formation is caused until use of the projector 4 is started. However, in the projector device disclosed in Embodiment 3, when the humidity sensor 9 installed in the cabinet 6 detects increase in humidity in the cabinet 6, the ventilation fan 8 installed in the cabinet 6 is driven to lower the humidity in the cabinet 6, thereby making it possible to perform projection in a favorable manner.

The projector device 40 according to Embodiment 3 is provided with the casters 7 on a bottom portion of the cabinet 6. Therefore, the projector device 40 can be freely moved not only to a bathroom, but also to a living room, a playroom, and the like.

Fig. 9 is a top view showing a projector device according to Embodiment 4 of the present invention. Fig. 10 is a side view showing the projector device according to Embodiment 4 of the present invention. Fig. 11 is a front view of the projector device according to Embodiment 4 of the present invention. There is provided the projector device 40, and reference numeral 6 denotes the cabinet, 4 denotes the projector, 62 denotes the glass door, 63 denotes a top cover, 7 denotes the caster, 8 denotes the ventilation fan, 9 denotes the humidity sensor, and 61 denotes the mirror surface.

According to the projector device of Embodiment 4, in the cabinet 6, the projector 4 for projecting the original image with magnification is installed. A light-blocking movable member arranged on a top surface of the cabinet 6, that is, the mirror surface 61 is installed on an inner surface of the top cover 63. A translucent movable member, that is, the glass door 62 is installed on one side surface of the cabinet 6.

The top cover 63 of the projector device according to Embodiment 4 is formed as a cover of a hinge opening/closing type, for occluding the top surface of the cabinet 6. When the top cover 63 is opened to a maximum degree, the top cover 63 can be arranged along a side wall of the cabinet 6 opposing the translucent door 4. As described above, when the top cover 63 is arranged along the side wall of the cabinet 6, the mirror surface 61 formed on the top cover 63 is arranged along the inner surface of the cabinet 6 to reflect the image light flux projected by the projector 4 thereon, thereby making it possible to perform projection without trapezoidal distortion from the glass door 62.

Note that in the projector device according to Embodiment 4, the light-blocking movable member is formed as the cover of the hinge opening/closing type. However, this should not be construed restrictively. For example, the light-blocking movable member arranged on the top surface of the cabinet may have a structure in which the movable member is once removed from the cabinet, and then, is arranged such that the mirror surface is opposed to the glass door of the cabinet.

### Industrial Applicability

With the above-mentioned construction, the present invention makes it possible to realize projection of a clear video image by preventing dew formation and clouding even with a bathroom projector system using a glass in a bathroom or the like where humidity is high.

Further, a translucent milk white portion of an intermediate film used for a laminated glass is formed only on a projection surface, and a portion other than the portion is formed to be transparent, thereby reducing a feeling of pressure in the bathroom so that an image can be viewed comfortably.

A heat generating glass plate of the present invention can prevent, by preferably making an entire surface thereof be a heat generating surface, the projection from being adversely affected by dew formed on the glass plate running thereon.

Further, with regard to the laminated glass, there arises a problem in that interior illumination in the bathroom and unnecessary light reflected by a reflector such as a looking glass arranged in a dressing room are reflected in the glass, thereby making the video image unclear. However, the problem can be solved by applying an anti-reflection etching to each of a projection surface and an image viewing surface of the glass, thereby making it possible to project a clear image.

A projector is arranged in the dressing room and the glass is arranged on a side surface separating the bathroom and the dressing room and is used as a screen, thereby making it possible to use the bathroom roomily. Further, a projector with a waterproof function is not required and a normal projector can be used.

Further, in a case where the projector is arranged in the dressing room, there is provided such a structure that the looking glass is arranged in the dressing room, the light flux from the projector is reflected on the looking glass, and the light flux reflected on the looking glass is projected on the projection surface of the laminated glass, thereby making it possible to realize the structure at low cost.

Note that a heat generating glass plate having a transparent conductive film is attached to the looking glass, thereby making it possible to prevent the dew formation and clouding even in the highly humid dressing room and to use the looking glass as a reflecting mirror.

Further, with regard to sound production means such as a speaker, exciter is installed on a side forming the projection surface of the laminated glass, thereby causing sound to be outputted from a plate material itself. Therefore, a direction of the image and a direction of a position where the sound is generated are the same, so it is possible to provide an effect of enhancing realistic sensation and spatial sensation of an audience. Further, the speaker is of a flat type, so there is such a functional advantage that a directivity of the sound is so low that the sound can be caught from every direction, thus, a difference in sound volume according to distance from a sound source is reduced.

Further, a cabinet for accommodating the projector is provided and a light flux from the projector is projected on the projection surface of the glass by the reflecting mirror provided in the cabinet, thereby making it possible to effectively utilize the narrow dressing room without using the short focus lens and without limitation on a position of the looking glass.

Further, in the projector device according to the present invention, even when the casing is downsized and thinned, no trapezoidal distortion is caused. Therefore, there is provided a projector device which is downsized and thinned to enable effective use of a space, and particularly, can be reliably used even in a highly humid environment such as in a bathroom.

## Claims

1. A bathroom projector system, comprising:
a bathroom in which, on at least one side thereof, a glass functioning as a projection surface is disposed;
a dressing room adjacent to the bathroom; and
a projector device which is installed in a position opposite to the glass, for projecting a video image, wherein:
the glass is formed of a laminated glass composed of at least two glass plates;
at least one glass plate of the laminate glass is a heat generating glass plate having a transparent conductive film; and
the two glass plates constituting the laminated glass are provided with a translucent milk white intermediate film interposed therebetween.

2. A bathroom projector system, comprising:
a bathroom in which, on at least one side thereof, a glass functioning as a projection surface is disposed;
a dressing room adjacent to the bathroom; and
a projector device which is installed in a position opposite to the glass, for projecting a video image, wherein:
the glass is formed of a laminated glass composed of at least two glass plates;
at least one glass plate of the laminate glass is a heat generating glass plate having a transparent conductive film; and
the two glass plates constituting the laminated glass are provided with an intermediate film interposed therebetween, only a portion of the intermediate film on which the video image from the projector device is projected being milk white and a portion thereof on which the video image from the projector is not projected being transparent.

3. A bathroom projector system according to claim 1 or 2, wherein an entire surface of the heat generating glass plate comprises a heat generating surface.

4. A bathroom projector system according to any one of claims 1 to 3, wherein an anti-reflection etching is applied to each of the projection surface and an image viewing surface of the laminated glass.

5. A bathroom projector system according to any one of claims 1 to 4, wherein:
the bathroom and the dressing room are arranged to be adjacent to each other;
the laminated glass is arranged on a side surface separating the bathroom and the dressing room; and
the projector device is arranged in the dressing room.

6. A bathroom projector system according to any one of claims 1 to 5, wherein the projector device is composed of: a cabinet; a projector stored in the cabinet, for projecting an original image with magnification; and an optical system for guiding an image light flux which is projected with magnification by the projector to the projection surface of the laminate glass.

7. A bathroom projector system according to any one of claims 1 to 5, wherein the projector device is composed of: a cabinet; a projector stored in the cabinet, for projecting an original image with magnification; and an optical system for guiding an image light flux which is projected with magnification by the projector to a predetermined portion of the cabinet.

8. A bathroom projector system according to any one of claims 1 to 5, wherein the projector device is composed of: a cabinet; a projector stored in the cabinet, for projecting an original image with magnification; and an optical system for guiding an image light flux which is projected with magnification by the projector to a predetermined portion of the cabinet and to the projection surface of the laminate glass.

9. A bathroom projector system according to any one of claims 1 to 5, wherein the projector device is composed of: a cabinet; a projector stored in the cabinet, for projecting an original image with magnification; and an optical system for guiding an image light flux which is projected with magnification by the projector to a predetermined portion of the cabinet and to the projection surface of the laminate glass, the cabinet being provided with a translucent opening and closing member in a predetermined portion thereof.

10. A bathroom projector system according to any one of claims 1 to 5, wherein the projector device is composed of: a cabinet; a projector stored in the cabinet, for projecting an original image with magnification; and an optical system for guiding an image light flux which is projected with magnification by the projector to a predetermined portion of the cabinet and to the projection surface of the laminate glass, the cabinet being provided with a translucent opening and closing member and a light-blocking movable member in a predetermined portion thereof.

11. A bathroom projector system according to any one of claims 6 to 10, wherein the optical system is composed of at least one mirror surface.

12. A bathroom projector system according to claim 10 or 11, wherein the light-blocking movable member is provided with a reflecting mirror surface formed on at least one surface thereof, the mirror surface functioning as a part of the optical system through a positional shift due to an opening operation or a closing operation of the movable member.

13. A bathroom projector system according to any one of claims 9 to 12, wherein the opening and closing member and/or the movable member are/is formed on a side surface of the cabinet.

14. A bathroom projector system according to any one of claims 10 to 13, wherein the movable member is formed on a top surface of the cabinet.

15. A bathroom projector system according to any one of claims 6 to 14, wherein the cabinet is provided with movable means on a bottom portion thereof.

16. A bathroom projector system according to any one of claims 6 to 15, wherein the cabinet includes therein ventilation means.

17. A bathroom projector system according to any one of claims 6 to 16, wherein the cabinet is provided with a humidity sensor.

18. A bathroom projector system according to claim 5, wherein:
a looking glass is arranged in the dressing room,
the looking glass reflects an image light flux from the projector device; and
the image flux reflected on the looking glass is projected on a projection surface of the laminated glass.

19. A bathroom projector system according to any one of claims 6 to 18, wherein a heat generating glass plate having a transparent conductive film is attached to the mirror surface or the looking glass.

20. A bathroom projector system according to any one of claims 1 to 19, wherein an exciter for causing the glass to vibrate to produce sound is mounted on a position on a surface on a side of the dressing room of the laminated glass other than the projection surface.

21. A projector device which is used in the bathroom projector system according to any one of claims 6 to 17.
